# EUROPÄISCHE PATENTSCHRIFT

(11) **EP 2 414 606 B1**
(45) Veröffentlichungstag und Bekanntmachung des Hinweises auf die Patenterteilung: **06.06.2018**
(21) Anmeldenummer: 09777263.6
(22) Anmeldetag: 17.07.2009
(51) Int. Cl.: F16B 5/06, F16B 19/10, F16B 21/08, H02B 1/30, E05B 9/08

(54) **SCHNAPPBEFESTIGUNG**
SNAP FASTENER
FIXATION RAPIDE

(30) Priorität: 01.04.2009 DE 202009004280 U
(43) Veröffentlichungstag der Anmeldung: 08.02.2012
(73) Patentinhaber: Ramsauer, Dieter, 58332 Schwelm (DE)
(72) Erfinder: Ramsauer, Dieter, 58332 Schwelm (DE)
(74) Vertreter: Stratmann, Ernst
(86) Internationale Anmeldenummer: PCT/EP2009/005207
(87) Internationale Veröffentlichungsnummer: WO 2010/112052

(56) Entgegenhaltungen:
- WO-A-2008/128560
- DE-U1-202004 016 009
- US-A- 5 435 159

## Beschreibung

### Hintergrund der Erfindung

Die Erfindung betrifft eine Schnappbefestigung, geeignet zur Festlegung einer mit einem Durchbruch versehenen ersten dünnen Wand, wie Gehäusewand, Türblatt, Klappe, oder dgl., an einem ebenfalls mit einem Durchbruch versehenen zweiten Wand, wie dünnwandigem Wandträger, wie Gehäuserahmen, Türrahmen, Wandöffnungsrand oder dgl., mit einem an der ersten (oder zweiten) dünnen Wand in deren Durchbruch anbringbarem Fußteil, mit sich von diesem Fußteil wegerstreckendem Kopfteil, welcher Kopfteil in seinem Längsschnitt vom Ende des Kopfteils in Richtung zum Fußteil einen zunächst anwachsenden und dann wieder abfallenden Durchmesser aufweist, welches Kopfteil ein männliches Einsteckteil darstellt, das von einem hinterschnittenem, von dem Durchbruch der dünnen Wand gebildeten oder getragenen weiblichen Einsteckteil unter Überwindung einer in Richtung des Durchmessers radial nach außen wirkenden Federkraft aufnehmbar ist, wobei der Kopfteil eine Führung oder Kanal für ein oder zwei oder mehr durch zumindest eine Feder in eine über das Ende der Führung oder des Kanals hinausragende Stellung gedrückte Schubelemente oder Halteelemente darstellt, deren aus der Führung oder dem Kanal hinausragende Enden in einer senkrecht zur dünnen Wand liegende Projektionsebene eine dreieckige Gestalt haben, wobei der Fußteil von einer der Längskanten des Durchbruchs in der dünnen Wand überdeckenden Platte gebildet ist, wobei der Kopfteil als ein Gehäuse mit nachgiebige Befestigungsflächen aufweisende Befestigungsvorsprünge wie Befestigungsnocken (aus nachgiebigem Material) oder Blattfedereinrichtungen vorgesehen ist, welches Gehäuse in eine Durchbruchöffnung in der dünnen Wand derart einklipsbar ist, dass es nur die eine dünne Wand (hinteres Blech) erfasst, und dass in dem Gehäuse Entriegelungseinrichtungen (Lösemittel) vorgesehen sind, mit denen von vorne die Schubelemente in das Gehäuse zurückziehbar sind, und das Gehäuse aus der anderen dünnen Wand (vorderes Blech) lösbar ist, wobei die Abmessungen zwischen dem Haltebereich der Befestigungsvorsprünge und denen der Schubelemente einerseits und der Auflageebene des Fußteils andererseits derart gewählt sind, dass bei zurückgezogenen Schubelementen die Befestigungsvorsprünge mit Spiel auf dem vorderen Blech aufliegen.

Eine derartige Schnappbefestigung ist aus der WO 2008/128560 bereits bekannt.

### Stand der Technik

Nachteilig bei dem Stand der Technik ist, dass bei Befestigung eines Wandteils an einem anderen Wandteil mit mehreren derartigen Schnappbefestigungen es schwierig ist, die Schnappbefestigungen gleichzeitig in die Stellung zu bringen, die ein Abziehen des einen Wandteils von dem anderen Wandteil ermöglicht.

### Aufgabe der Erfindung

Es ist Aufgabe der Erfindung, eine Schnappbefestigung der eingangs genannten Art dahingehend weiterzubilden, dass diese nachteilige Eigenschaft nicht mehr vorhanden ist.

### Lösungswege

Die Aufgabe wird erfindungsgemäß dadurch gelöst, dass auf der Auflageebene des Fußteils eine zwischen dieser und der zugehörigen Randebene der dünnen Wand (vorderes Blech) zu liegen kommende Druckfeder, insbesondere eine Spiralfeder oder eine hohlgebogene Blattfeder angeordnet ist.

Dadurch wird die Schnappbefestigung automatisch in eine Lage gedrückt, die ein Abnehmen der einen Wand von der anderen so ermöglicht wird, ohne dass auf die einzelnen Schnappbefestigungen näher geachtet werden muss.

Gemäß einer Weiterbildung der Erfindung ist die Druckfeder eine Spiralfeder, die das rechteckigen oder quadratischen Querschnitt aufweisenden Kopfteil nahe dem Fußteil umschließt. Dies erlaubt eine Drehsicherung der Schnappbefestigung bezüglich der Wand.

Gemäß dieser Ausbildung der Erfindung ist die Druckfeder an der Auflageebene des Fußteils befestigt. Das hat den Vorteil, dass die Feder nicht verloren geht und bereits beim Montieren in der richtigen Lage sich befindet.

Gemäß einer noch anderen Ausführungsform der Erfindung ist die Spiralfeder von einer Scheibe gegen die Auflageebene des Fußteils gedrückt, was ermöglicht, die Kräfte der Spiralfeder besser auf die Wand zu verteilen.

Außerdem wird eine Ausführungsform ermöglicht, gemäß der die Scheibe eine die Axialerstreckung der Spiralfeder in deren zusammengedrücktem Zustand umschließenden Ring bildet und dabei eine formschlüssige Druckverbindung zwischen der Auflageebene und der Randebene der dünnen Wand (vorderes Blech) herstellt. Das hat den Vorteil, dass ein besonders feste Befestigung ermöglicht wird, die von der Kraft der Feder unabhängig ist.

Demgegenüber hat die Ausführungsform ohne die Scheibe oder mit der Scheibe aber ohne diese Ringform den Vorteil der Einfachheit und außerdem die Möglichkeit, eine größere Spielbreite überbrücken zu können, indem Spiel auch von der Druckfeder oder Spiralfeder ausgeglichen werden kann. Das federgestützte Spiel kann auch dazu dienen, bei Kurzschlüssen in elektrischen Anlagen ein Abheben der Türe oder Klappe zu ermöglichen, um eine Verpuffung der entstanden Gase zuzulassen oder den Druck zu entlasten.

So ist es möglich, unterschiedliche Blechstärken ohne Wechseln der Schnappbefestigung akkurat aneinander zu befestigen.

Das Lösemittel kann, wie beim Stand der Technik, aus einem im Fußteil drehbar gelagerter Betätigungsdorn gebildet sein, wobei erfindungsgemäß der Betätigungsdorn die Druckfeder und ggf. die Scheibe durchragt und an seinem inneren, auf die Schubelemente gerichteten Stirnende einen radialen Steg bildet, der in Rücksprünge der Halteelemente eingreift und bei Drehung des Betätigungsdorns in Löserichtung die Halteelemente gegen Federkraft zurückzieht.

Bei einer Ausführungsform der Erfindung ist anstelle des Betätigungsdorns eine axiale, bis zu den Rücksprüngen in den Halteelementen reichende Bohrung vorgesehen, durch die ein eine flache Klinge aufweisender Schraubendreher hindurchgeführt werden kann, um mit der Klinge die Halteelemente zurückzuziehen. Auf diese Weise erspart man sich einen Betätigungsdorn und verbilligt die Herstellung der Schnappbefestigung.

Alternativ kann aber der Betätigungsdorn auch an seinem äußerem Ende mit einer Aufnahme für ein Drehwerkzeug versehen sein, wobei das Ende den Kopfteil nicht überragt, so dass Kompaktheit vorhanden ist.

Benötigt wird dann ein Werkzeug, das zu der Aufnahme passt, mit dem die Schnappbefestigung gelöst wird.

Eine weitere Alternative liegt darin, den Betätigungsdorn an seinem äußerem Ende mit einer Handhabe wie Drehknopf mit Rändelung zu versehen, die das Ende des Kopfteils überragt, was die Handhabung erleichtert und ermöglicht, die Schnappbefestigung ohne Werkzeug zu lösen.

Durch die neu konzipierte Feder wird erreicht, dass auch ohne diesen Handgriff die Feder die Schnappbefestigung soweit herausdrückt, dass sie nicht weiter herausgezogen werden braucht, um die eine dünne Wand von der anderen dünnen Wand abzuziehen. Außerdem vergrößert die Feder den Klemmbereich. Außerdem ist der Vorteil der, dass eine Kontrolle gegeben ist, dass eine Verbindung der Wände erreicht wurde, da bei Versagen der Halterung diese Feder die Schnappbefestigung wieder herauszieht und dadurch sich zeigt, dass sie nicht gegriffen hat.

### Detaillierte Beschreibung der Erfindung

Die Erfindung wird nachfolgend anhand von Ausführungsbeispielen näher erläutert, die in den Zeichnungen dargestellt sind.

Es zeigt:
- Fig. 1A: eine axiale Schnittansicht in einer Ausführungsform der erfindungsgemäßen Schnappbefestigung;
- Fig. 1B: eine Draufsicht auf die Ausführungsform gemäß Fig. 1A;
- Fig. 1C: eine Schnittansicht entlang der Linie E-E in Fig. 1B;
- Fig. 1D: eine Rückansicht auf die Anordnung gemäß Fig. 1A;
- Fig. 1E: eine vergrößerte Darstellung der Schubelemente und der Löseeinrichtung in einer perspektivischen Darstellung;
- Fig. 2A, 2B, 2C und 2D: entsprechende Ansichten wie die Fig. 1A bis 1D von der gleichen Schnappbefestigung, jedoch bei dünnen Wänden;
- Fig. 2E: eine andere Art der Lösemöglichkeit in vergrößerter Darstellung;
- Fig. 3: eine Explosionsdarstellung der Anordnung gemäß Fig. 1A und 1B;
- Fig. 4A: eine Seitenansicht;
- Fig. 4B: eine axiale Schnittansicht entlang der Linie B-B der Fig. 4A;
- Fig. 4C: eine Schnittansicht entlang der Linie A-A der Fig. 4A;
- Fig. 4D: eine Ansicht von oben auf die Anordnung gemäß der Fig. 4A;
- Fig. 4E: eine perspektivische Ansicht der Anordnung gemäß Fig. 4A, das ist die Anordnung der Fig. 1A vor der Montage in einer dünnen Wand;
- Fig. 5A, 5B, 5C und 5D: verschiedene Ansichten einer Anordnung ähnlich der Fig. 4A, jedoch ohne Handrad;
- Fig. 6A und 6B: eine Ausführungsform ohne einen Betätigungsdorn, bei der gemäß Fig. 6B mit einem Schraubenzieher die Schubelemente direkt zurückgezogen werden;
- Fig. 7A, 7B, 7C und 7D: zwei Schnittansichten und eine Frontalansicht und eine perspektivische Darstellung zur weiteren Erläuterung der Erfindung;
- Fig. 8A bis 8F: in verschiedenen Ansichten eine weitere Ausführungsform mit anderer Befestigung der U-förmigen Haltefeder,
- Fig, 9A bis 9E: in verschiedenen Ansichten eine weitere Ausführungsform mit einer Druckfeder in Form einer hohlgebogenen Blattfeder, und Lösung mittels Rädchen, und
- Fig. 10 A bis 10 I: in verschiedenen Ansichten eine noch weitere Ausführungsform mit hohlgebogener Blattfeder und Lösung mittels Schraubenzieher.

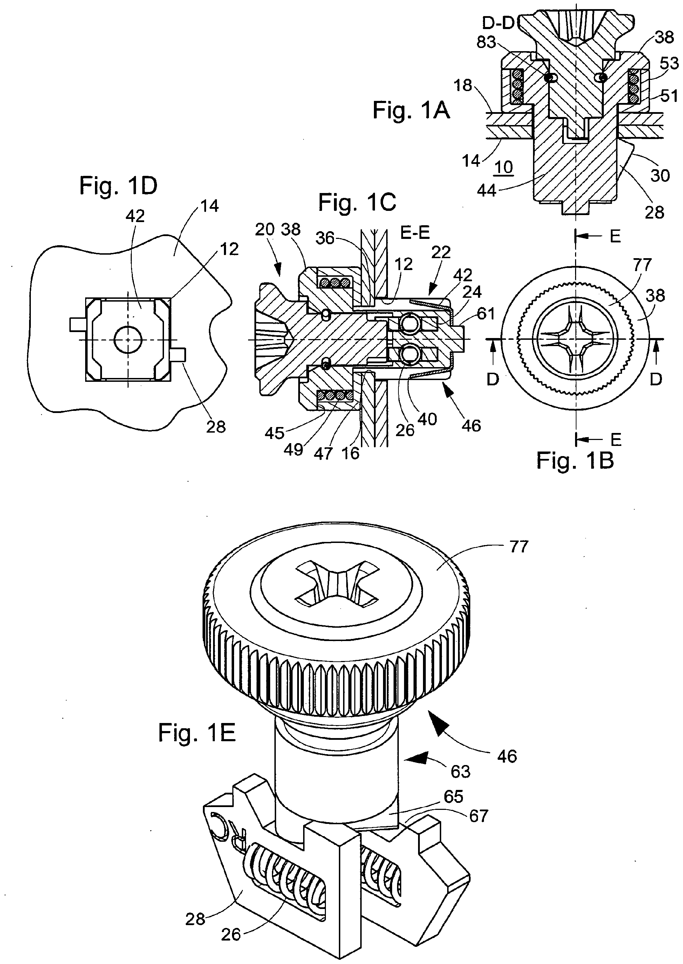

- Die Fig. 1A: zeigt in einer ersten axialen Schnittansicht längs der Schnittlinie D-D der

Fig. 1B, diese stellt eine Ansicht von oben dar, eine Schnappbefestigung 10, die zur Festlegung einer mit einem Durchbruch 12 versehenen ersten dünnen Wand 14, wie Gehäusewand, Türblatt, Klappe oder dgl., an einem ebenfalls mit einem Durchbruch 16 versehenen zweiten dünnen Wand 18, wie dünnwandigem Wandträger, wie Gehäuserahmen, Türrahmen, Wandöffnungsrand oder dgl. geeignet ist, mit einem an der ersten (oder zweiten) dünnen Wand 14 bzw. 18 in deren Durchbruch 12 bzw. 16 anbringbarem Fußteil 20, mit sich von diesem Fußteil 20 wegerstreckendem Kopfteil 22, welcher Kopfteil 22 in seinem Längsschnitt vom Ende des Kopfteils 22 in Richtung zum Fußteil 20 einen zunächst anwachsenden und dann wieder abfallenden Durchmesser aufweist, siehe Fig. 1A, Bezugszahl 30, welcher Kopfteil 22 ein männliches Einsteckteil darstellt, das von einem hinterschnittenem, von dem Durchbruch 12 der dünnen Wand 14 gebildeten oder getragenen weiblichen Einsteckteil unter Überwindung einer in Richtung des Durchmessers radial nach außen wirkenden Federkraft, siehe die Druckfeder 26 in Fig. 1C, in einer Schnittansicht entlang der Schnittlinie E-E der Fig. 1B, aufnehmbar ist. Dabei bildet der Kopfteil 22 eine Führung oder Kanal 24 für ein oder zwei oder mehr durch zumindest eine Feder 26 in eine über das Ende der Führung oder des Kanals 24 hinausragende Stellung gedrückte Schubelemente oder Halteelemente 28, deren aus der Führung oder dem Kanal 24 hinausragende Enden 30 in einer senkrecht zur dünnen Wand 14 bzw. 16 (liegende Projektionsebene eine dreieckige Gestalt haben, wobei der Fußteil 20 von einer der Längskanten 36 des Durchbruchs 16 in der dünnen Wand 18) überdeckenden Platte 38 gebildet ist, wobei der Kopfteil 22 als ein Gehäuse 44 mit nachgiebigen Befestigungsflächen 40 aufweisende Befestigungsvorsprünge wie Befestigungsnocken (aus nachgiebigem Material) oder Blattfedereinrichtungen 42 vorgesehen sind, welches Gehäuse 44 in eine Durchbruchöffnung 12 in der dünnen Wand 14 derart einklipsbar ist, dass es nur die eine dünne Wand 14 (hinteres Blech) erfasst, und dass in dem Gehäuse 44 Entriegelungseinrichtungen (Lösemittel) 46 vorgesehen sind, mit denen von vorne die Schubelemente 28 in das Gehäuse 44 zurückziehbar sind, wobei das Gehäuse 46 aus der anderen dünnen Wand 18 (vorderes Blech) lösbar ist, und wobei die Abmessungen zwischen dem Haltebereich der Befestigungsvorsprünge 42 und deren der Schubelemente 28 einerseits und der Auflageebene des Fußteils 20 andererseits derart gewählt sind, dass bei zurückgezogenen Schubelementen 28 die Befestigungsvorsprünge 42 mit Spiel auf dem vorderen Blech 18 aufliegen.

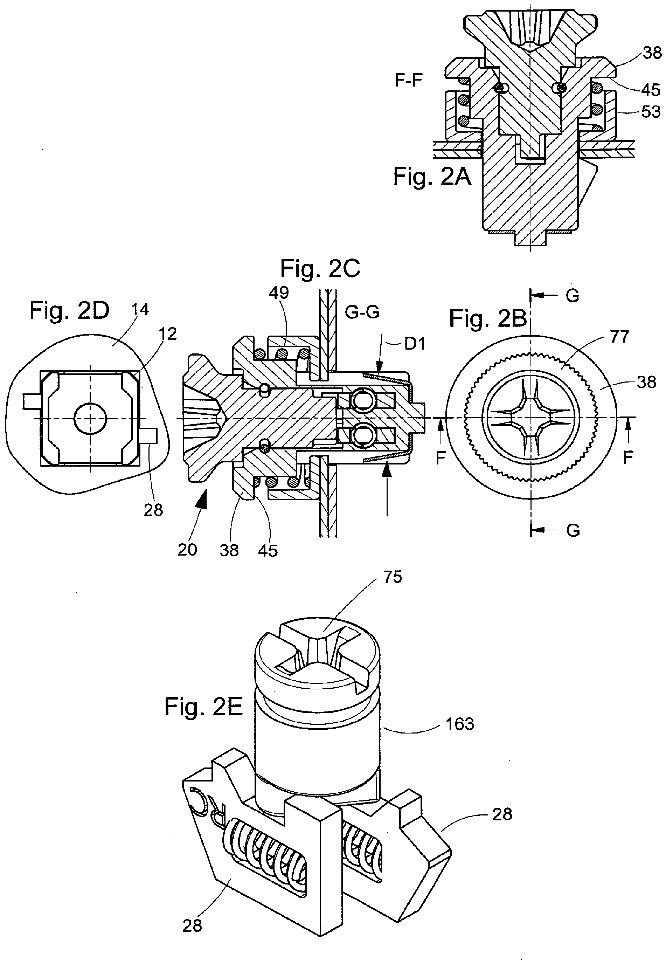

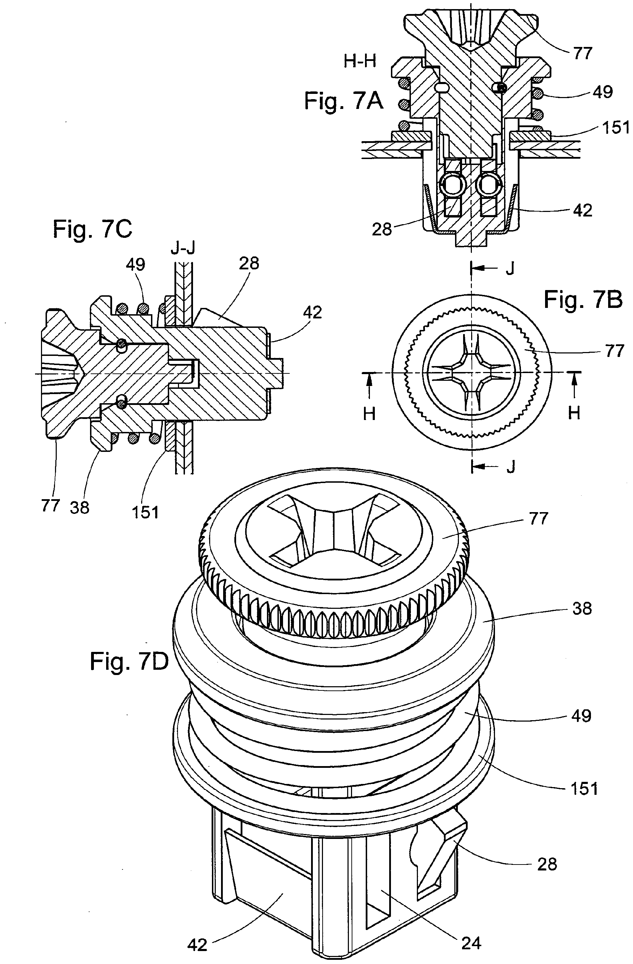

Erfindungsgemäß ist nun zwischen der Auflageebene 45 des Fußteils 20 eine zwischen dieser und der zugehörigen Randebene 47 der dünnen Wand 18 (vorderes Blech) zu liegen kommende Druckfeder 49 angeordnet. Zwischen der Randebene 47 und der Druckfeder 49 kann eine Scheibe 151, siehe Fig. 7A, vorgesehen sein, so dass die Druckfeder von dieser Scheibe gegen die Auflageebene 45, siehe Fig. 1C des Fußteils 20 gedrückt wird. Die Scheibe 51 kann auch einen die Axialerstreckung der Spiralfeder 49 umschließenden Ring 53 bilden und dabei eine formschlüssige Druckverbindung zwischen der Auflageebene 45 und der Randebene 47 der dünnen Wand (vorderes Blech) 18 herstellen, wenn eine gewisse Kraft überschritten wird, bei der die Druckfeder 49 ganz zusammengedrückt ist. Dieser Zustand ist in Fig. 1A dargestellt und in Fig. 1C ebenfalls zu erkennen. Sind die Bleche 14, 18 oder die dünnen Wände dünner als in Fig. 1A, erkennt man, so beispielsweise in Fig. 2A, dass ohne die erfindungsgemäße Druckfeder eine formschlüssige Verbindung nicht mehr herstellbar ist, und die Schnappbefestigung wäre locker. Durch die Druckfeder 49 wird dies verhindert, die sich entspannt und dadurch einen kraftschlüssigen Halt sicherstellt.

Dabei entfernen sich die Platte 39 von der Scheibe bzw. dem Ring 53; siehe Fig. 2A.

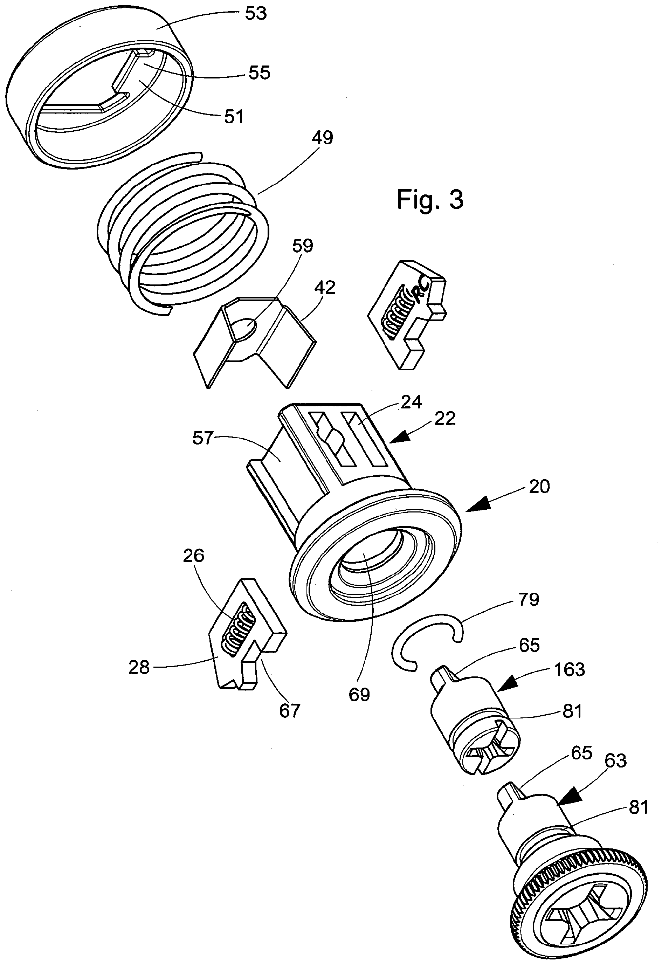

Wie auch Fig. 3 erkennen lässt, stellt die Druckfeder 49 eine Spiralfeder dar, die das rechteckige oder quadratisch im Querschnitt aufweisende Kopfteil 22 nahe dem Fußteil 20, der auch rund sein kann, umschließt.

Um zu verhindern, dass die Druckfeder 49 ungewollt von dem Kopf- bzw. Fußteil abgleitet, kann vorgesehen sein, die Druckfeder 49 an der Auflageebene 45 des Fußteils 20 zu befestigen. Das kann dadurch geschehen, dass der Durchmesser der Spiralfeder 49 so gestaltet ist, dass er mit gewissem Druck über die Querschnittsform des Kopfteils 22 geschoben wird und dadurch sich verklemmt, wobei allerdings die Federkraft ausreichend sein muss, um eine axiale Verschiebung zum Ausgleich der Druckkräfte zu ermöglichen.

Alternativ kann aber auch die Blattfeder 42 oder die Schubelemente 28 verhindern, dass die Spiralfeder 49 von dem Schnappbefestigungsbauteil abgleitet, ebenso kann die Blattfeder 42 die Scheibe 51 festhalten, zu welchem Zweck die Scheibe nach innen ragende Vorsprünge 55 aufweisen kann, siehe Fig. 3. Diese werden durch entsprechende Nuten 57 im Kopfteil 22 aufgenommen und ergeben gleichzeitig Drehfestigkeit.

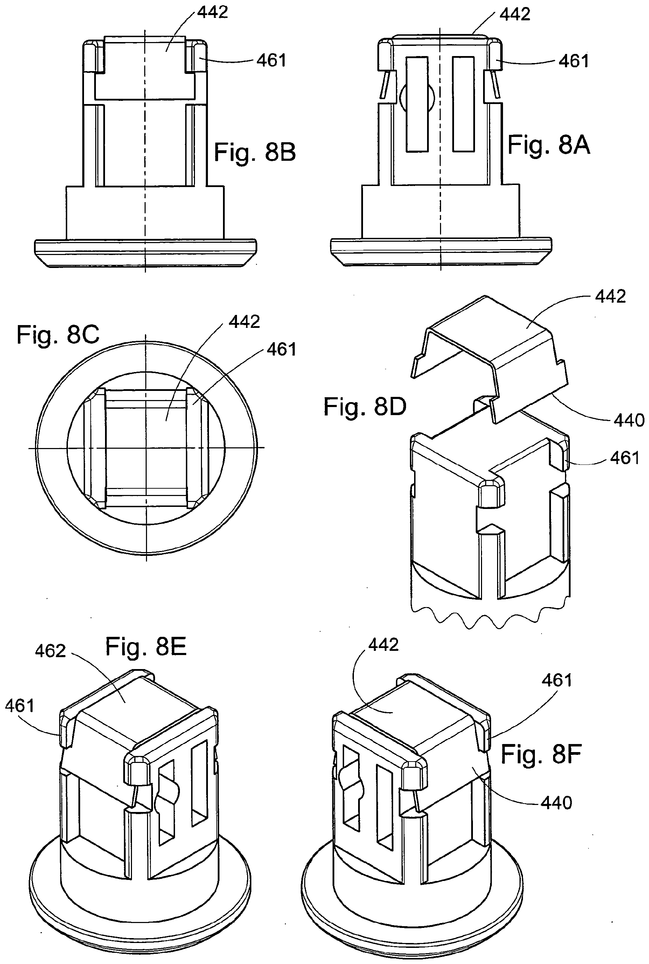

Die U-förmig gebogene Blattfeder 42 kann in ihrem Stegbereich einen Durchbruch 59 aufweisen, der auf einem Ansatz 61 gehalten ist, der von dem Kopfteil 22 ausgeht. Statt mit einem Ansatz 61 kann die U-förmige Blattfeder 442 gemäß den Fig. 8A - 8F auch durch seitliche, vom Gehäuse 446 gebildete Vorsprünge 461 in Stellung gehalten werden.

Das die Schubelemente 28 zurückziehende Lösemittel 46 kann aus einem im Fußteil 20 drehbar gelagerten Betätigungsdorn 63 bzw. 163, siehe Fig. 3, gebildet sein, wobei erfindungsgemäß der Betätigungsdorn die Druckfeder 49 und ggf. die Scheibe 52 durchragt und an seinem inneren, auf die Schubelemente 28 gerichteten Stirnende einen radialen Steg 65 bildet, der in Rücksprünge 67 der Halteelemente 28 eingreift und bei Drehung des Betätigungsdorns 63, 163 in Löserichtung die Halteelemente 28 gegen Federkraft 26 in das Gehäuse zurückzieht.

Anstelle des Betätigungsdorns 63, 163 kann auch eine axiale, bis zu den Rücksprüngen 67 in den Halteelementen 28 reichende Bohrung 69 vorgesehen sein, durch die ein eine flache Klinge 71 aufweisender Schraubendreher 73 hindurchgeführt werden kann, um mit der Klinge 71 die Halteelemente 28 zurückzuziehen.

Gemäß Fig. 2E und gemäß Fig. 3 kann der Betätigungsdorn 63 an einem äußeren Ende mit einer Aufnahme für ein Drehwerkzeug versehen sein, vorzugsweise mit einer Kreuzschlitzaufnahme 75, wobei das Ende der Aufnahme das Fußteil nicht überragt.

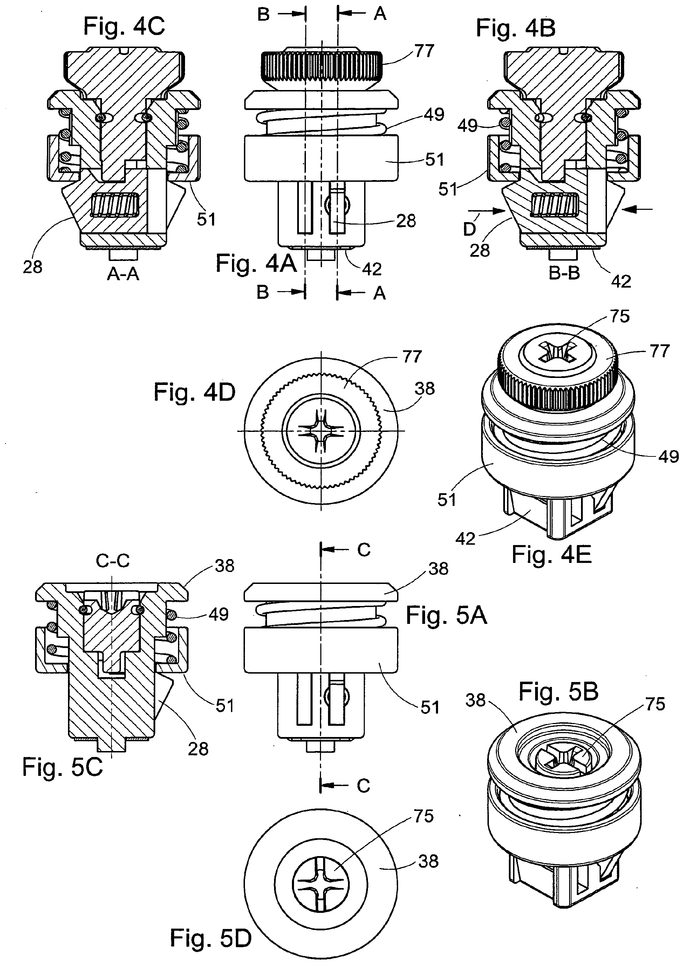

Alternativ oder zusätzlich kann der Betätigungsdorn 63 an seinem äußerem Ende mit einer Handhabe wie ein Drehknopf 77 mit Rändelung versehen sein und das Fußende 20 überragen, siehe beispielsweise Fig. 4F oder Fig. 1E oder Fig. 3.

Der Betätigungsdorn 63, 163 kann einen Sicherungsring 79 in dem Gehäuse enthalten, wobei der Sicherungsring 79 einerseits in einer Ringnut 81 des Betätigungsdorns 63 bzw. 163 zu liegen kommt, andererseits in einer Ringnut 83, Fig. 4A und 4B wie auch Fig. 4C zeigen die Schnappbefestigung gemäß Fig. 1A in einem unmontierten Zustand, wenn keine dünne Wand gehalten wird bzw. dessen Schnappbefestigung hält. Hier erkennt man auch, wie die becherförmige Ringscheibe 59 sich direkt auf die Halteelemente 28 legt und so daran gehindert wird, abzugleiten.

Statt der runden Feder 49 kann auch eine hier nicht dargestellte rechteckige Spiralfeder Verwendung finden, die sich besser an die Form des Kopfteils 22 anpassen würde und weniger Platz beanspruchen würde.

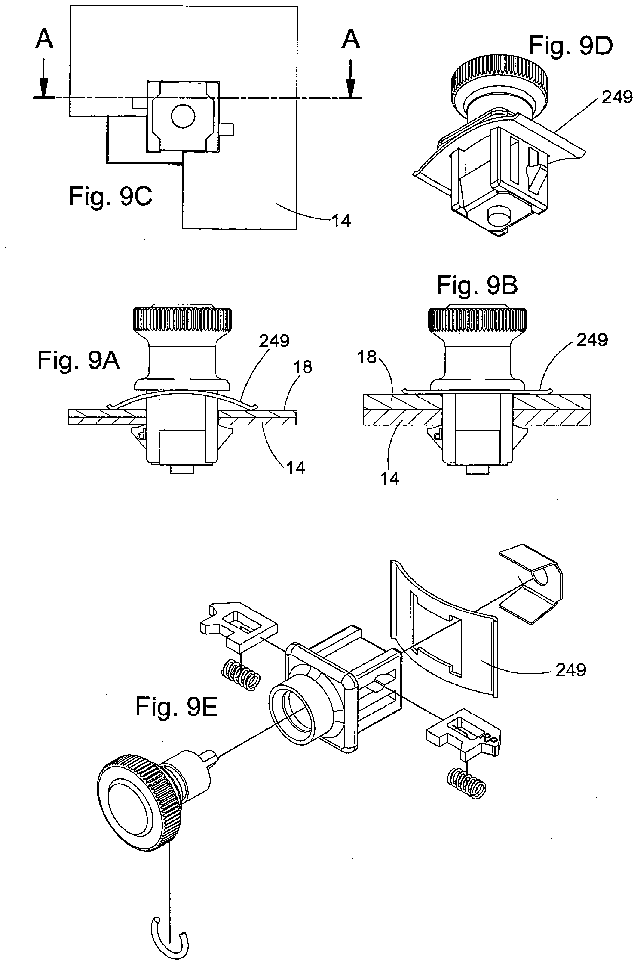

Anstelle der Spiralfeder 49 kann gemäß den Fig. 9A bis 9E eine hohlgebogene Blattfeder 249 als Druckfeder dienen.

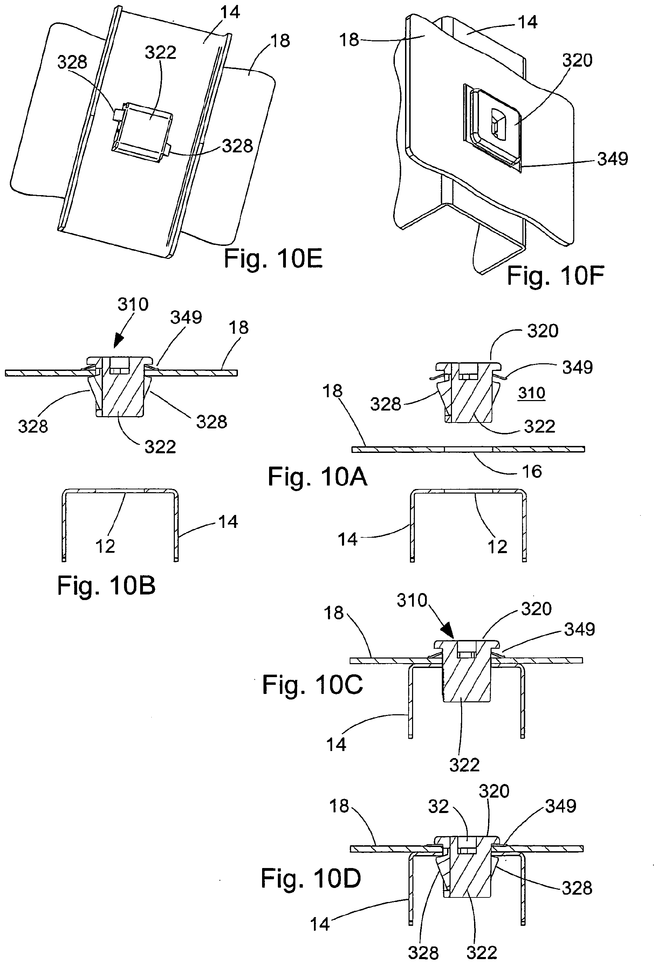

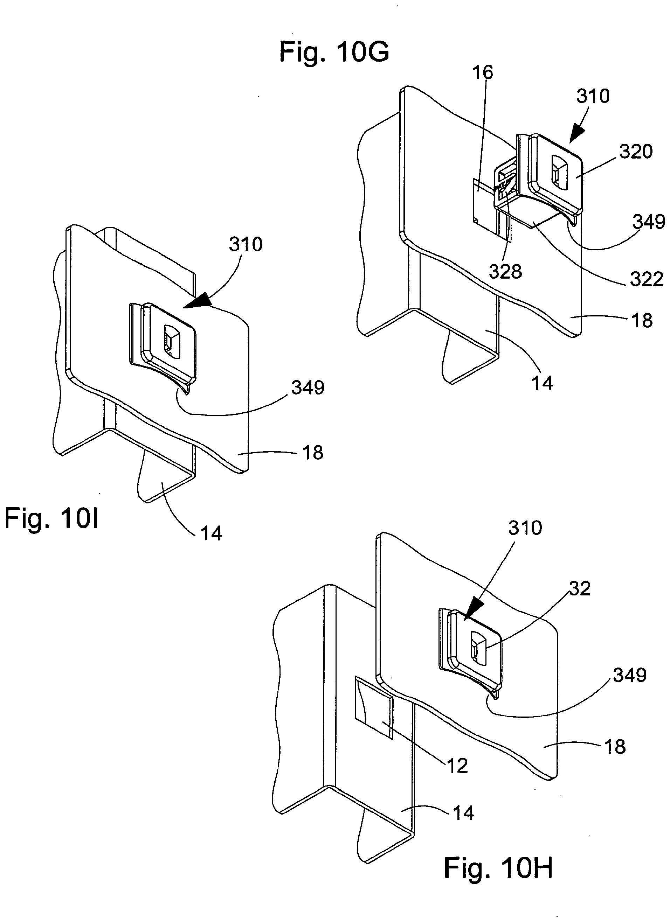

Fig. 10A bis 10I zeigen eine Ausführungsform, bei der statt der in Fig.1 C dargestellten Blattfedereinrichtungen 42 als Befestigungsvorsprünge nachgiebige Befestigungsnocken vorgesehen sind. Deren Funktion übernehmen gemäß Fig. 10 B die Schub- oder Halteelemente 328.

Wie dargestellt funktioniert die Ausführungsform gemäß Fig. 10A bis 10I folgendermaßen:
In Fig.10A und Fig. 10G sind die beiden dünnen Wände 14 und 18 mit ihren Durchbrüchen 12 bzw. 16 und die Schnappbefestigung 310 voneinander getrennt. Blattfeder 349 und Halteelemente 328 sind entspannt.

In Fig. 10B und Fig. 10H ist die Schnappbefestigung 310 mit ihrem Kopfteil 322 und den beiden Halteelementen 328 durch den Durchbruch 16 des Türblatts 18 oder dgl. hindurchgeschoben, die Blattfeder 349 ist noch entspannt, die Halteelemente 328 verhindern ein wieder Hinausgleiten der Schnappbefestigung 310 aus dem Durchbruch 16 der dünnen Wand 18.

In Fig. 10C und Fig, 10I ist die dünne Wand 18 mit der von ihr gehaltenen Schnappbefestigung 310 auf den Wandträger 14 mit dem Durchbruch 12 soweit aufgesteckt, dass die Halteelemente 328 ganz eingeschoben sind, die Blattfeder 349 ist weiterhin entspannt. (Dies ist auch die Lösestellung, die ein Abziehen der Wand 18 von der Wand 14 ermöglicht.)

In Fig. 10D bzw. Fig. 10E und 10F sind schließlich nach Eindrücken des Fußteils 320 mit dem Daumen gegen die Kraft der gebogenen Blattfeder 349, die sich dabei abflacht, die Halteelemente 328 zurückgesprungen und halten jetzt die beiden Wände 14 und 18 fest aneinander.

Das Lösen der Wand 18 von dem Wandträger 14 geschieht in der Weise, dass mittels eines geeigneten Steckschlüssels oder Werkzeugs, wie Schraubenziehers, dessen Klinge in die bis zu den Halteelementen reichende Bohrung 32 eingeführt und dann soweit gedreht wird, bis die Halteelemente 328 ganz zurückgezogen werden, das entspricht dem Übergang vom Fig. 10D nach Fig. 10C. In diesem Augenblick zieht die Federkraft der gebogenen Blattfeder 349 die Schnappbefestigung soweit zurück, dass die Ränder der Öffnung 12 des Wandträgers 14 frei kommen, womit der Zustand der Fig. 10B erreicht ist.

Will man auch das Halteelement 310 vom Wandträger 14 trennen, genügt ein erneutes Drehen des Schraubendrehers.

Der Vorteil der letztgenannten Ausführungsform ist die preisgünstige Herstellung, da die Feder 42 wegfällt. Allerdings muss die Stärke der Wand und die des Wandträgers so gewählt werden, dass zunächst nur die dünne Wand und erst danach der Wandträger freikommt.

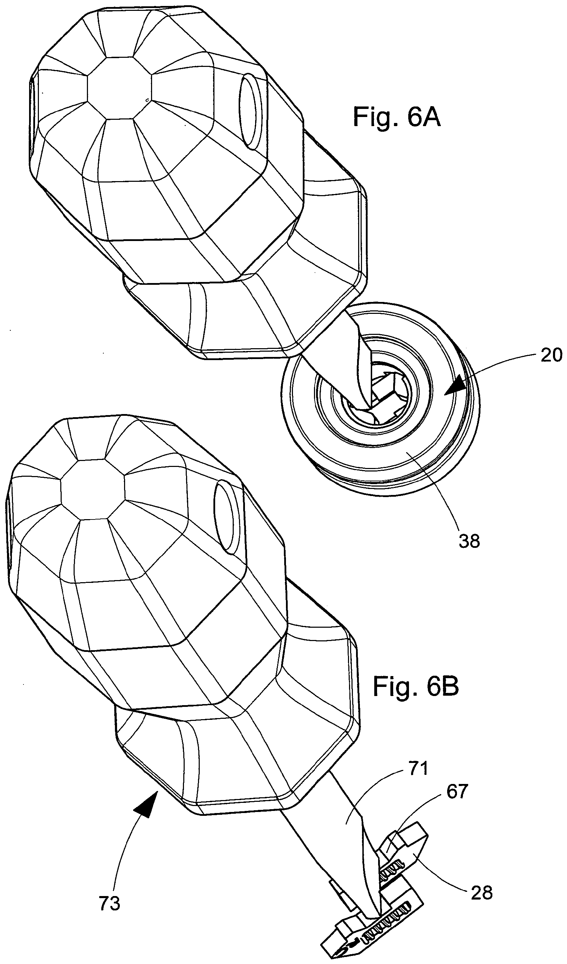

Die Ausführungsform gemäß Fig 1A bis 10I verträgt größere Toleranzen.

### Gewerbliche Auswertbarkeit

Die Erfindung ist im Schaltschrankbau und Fassadenbau gewerblich auswertbar.

### Bezugszeichenliste:

- 10, 310: Schnappbefestigung
- 12: Durchbruch
- 14: erste dünneWand, Gehäusewand
- 16: Durchbruch
- 18: zweite dünne Wand, Wandträger
- 20, 320: Fußteil
- 22, 322: Kopfteil
- 24: Führung, Kanal
- 26: Feder
- 28, 328: Schubelement, Halteelement
- 36: Längskante
- 38: Platte
- 40, 440: Befestigungsflächen
- 42, 442: Blattfeder
- 44: Gehäuse
- 45: Auflageebene
- 46, 446: Lösemittel
- 47: Randebene
- 49, 249, 349: Druckfeder
- 51, 151: Scheibe
- 53: Ring
- 55: Vorsprünge
- 57: Nut
- 59: Durchbruch
- 61, 461: Ansatz
- 63, 163: Betätigungsdorn
- 65: Steg
- 67: Rücksprung
- 69: Bohrung
- 71: Klinge
- 73: Schraubendreher
- 75: Kreuzschlitzaufnahme
- 77: Drehknopf
- 79: Sicherungsring
- 81: Ringnut
- 83: Ringnut
- D: Durchmesser

## Patentansprüche

1. Schnappbefestigung (10), geeignet zur Festlegung einer mit einem Durchbruch (12) versehenen ersten dünnen Wand (14), wie Gehäusewand, Türblatt, Klappe oder dgl., an einem ebenfalls mit einem Durchbruch (16) versehenen zweiten dünnen Wand (18), wie dünnwandigem Wandträger, wie Gehäuserahmen, Türrahmen, Wandöffnungsrand oder dgl., mit einem an der ersten (oder zweiten) dünnen Wand (14, 18) in deren Durchbruch (12, 16) anbringbarem Fußteil (20), mit sich von diesem Fußteil (20) wegerstreckendem Kopfteil (22), welcher Kopfteil (22) in seinem Längsschnitt vom Ende des Kopfteils (22) in Richtung zum Fußteil (20) einen zunächst anwachsenden und dann wieder abfallenden Durchmesser (D) aufweist, welcher Kopfteil (22) ein männliches Einsteckteil darstellt, das von einem hinterschnittenen, von dem Durchbruch der dünnen Wand (14, 18) gebildeten oder getragenen weiblichen Einsteckteil unter Überwindung einer in Richtung des Durchmessers (D) radial nach außen wirkenden Federkraft aufnehmbar ist, wobei der Kopfteil (22) eine Führung oder Kanal (24) für ein oder zwei oder mehr durch zumindest eine Feder (26) in eine über das Ende der Führung (24) oder des Kanals hinausragende Stellung gedrückte Schubelemente oder Halteelemente (28) darstellt, deren aus der Führung (24) oder dem Kanal hinausragende Enden in einer senkrecht zur dünnen Wand (14, 18) liegende Projektionsebene eine dreieckige Gestalt haben, wobei der Fußteil (20) von einer die Längskanten (36) des Durchbruchs (16) in der dünnen Wand (18) überdeckenden Platte (38) gebildet ist, wobei der Kopfteil (22) als ein Gehäuse mit nachgiebigen Befestigungsflächen aufweisende Befestigungsvorsprünge wie Befestigungsnocken (aus nachgiebigem Material) oder Blattfedereinrichtungen (42) vorgesehen ist, welches Gehäuse in eine Durchbruchöffnung (16, 12) in der dünnen Wand (14, 18) derart einklipsbar ist, dass es nur die eine dünne Wand (hinteres Blech) (14) erfasst, und dass in dem Gehäuse Entriegelungseinrichtungen (Lösemittel) (46) vorgesehen sind, mit denen von vorne die Schubelemente (28) in das Gehäuse zurückziehbar sind, und das Gehäuse aus der anderen dünnen Wand (vorderes Blech) (18) lösbar ist, wobei die Abmessungen zwischen dem Haltebereich der Befestigungsvorsprünge (72) und denen der Schubelemente (28) einerseits und der Auflageebene (45) des Fußteils (22) andererseits derart gewählt sind, dass bei zurückgezogenen Schubelementen (28) die Befestigungsvorsprünge (40) und mit Spiel auf dem vorderen Blech (18) aufliegen, **dadurch gekennzeichnet, dass** auf der Auflageebene (45) des Fußteils (20) eine zwischen dieser und der zugehörigen Randebene (47) der dünnen Wand (vorderes Blech) (18) zu liegen kommende Druckfeder (49) angeordnet ist.

2. Schnappbefestigung nach Anspruch 1, **dadurch gekennzeichnet, dass** die Druckfeder (49) eine Spiralfeder darstellt, die das rechteckigen oder quadratischen Querschnitt aufweisenden Kopfteil (22) nahe dem Fußteil (20) umschließt.

3. Schnappbefestigung nach Anspruch 1oder 2, **dadurch gekennzeichnet, dass** die Druckfeder (49) an der Auflageebene (45) des Fußteils (20) befestigt ist.

4. Schnappbefestigung nach Anspruch 1, **dadurch gekennzeichnet, dass** die Spiralfeder (49) von einer Scheibe (51) gegen die Auflageebene (45) des Fußteils (20) gedrückt wird.

5. Schnappbefestigung nach Anspruch 4, **dadurch gekennzeichnet, dass** die Scheibe (51) einen die Axialerstreckung der Spiralfeder (42) in deren zusammengedrücktem Zustand umschließenden Ring (53) bildet und dabei eine formschlüssige Druckverbindung zwischen der Auflageebene (45) und der Randebene (47) der dünnen Wand (vorderes Blech) (18) herstellen kann.

6. Schnappbefestigung nach einem der Ansprüche 1 bis 5, wobei das Lösemittel (46) aus einem im Fußteil drehbar gelagerter Betätigungsdorn (63, 163) gebildet ist, **dadurch gekennzeichnet, dass** der Betätigungsdorn (63, 163) die Druckfeder (43) und ggf. die Scheibe (51) durchragt und an seinem inneren, auf die Schubelemente (28) gerichteten Stirnende eine radialen Steg (65) bildet, der in Rücksprünge (67) der Halteelemente (28) eingreift und bei Drehung des Betätigungsdorns (63, 163) in Löserichtung die Halteelemente (28) gegen Federkraft zurückzieht.

7. Schnappbefestigung nach Anspruch 6, **dadurch gekennzeichnet, dass** anstelle des Betätigungsdorns (63, 163) eine axiale, bis zu den Rücksprüngen (67) in den Halteelementen (28) reichende Bohrung (69) vorgesehen ist, durch die ein eine flache Klinge (71) aufweisender Schraubendreher (73) hindurchgeführt werden kann, um mit der Klinge (71) die Halteelemente (28) zurückzuziehen.

8. Schnappbefestigung nach einem der Ansprüche 1 bis 7, wobei der Betätigungsdorn (63, 163) an seinem äußerem Ende mit einer Aufnahme für ein Drehwerkzeug versehen ist, wobei das Ende den Fußteil (20) nicht überragt.

9. Schnappbefestigung nach einem der Ansprüche 1 bis 7, wobei der Betätigungsdorn (63, 163) an seinem äußerem Ende mit einer Handhabe wie Drehknopf mit Rändelung versehen ist und das Ende des Kopfteils überragt.

10. Schnappbefestigung nach Anspruch 1 oder 2, **dadurch gekennzeichnet, dass** die Druckfeder eine hohlgebogene Blattfeder (249, 349) ist.

11. Schnappbefestigung nach Anspruch 1 oder 2, **dadurch gekennzeichnet, dass** die U-förmige Blattfeder (442) durch seitliche, vom Gehäuse (446) gebildete Vorsprünge (461) in Stellung gehalten werden.

## Claims

1. A snap fastening (10), suitable for fixing a first thin wall (14) equipped with an opening (12), such as a casing wall, door leaf, flap or the like, to a second thin wall (18) likewise equipped with an opening (16), such as a thin-walled wall bracket, such as a casing frame, door frame, wall aperture edge or the like, having a base part (20) which can be attached to the first (or second) thin wall (14, 18) in the opening (12, 16) thereof, with a head part (22) which extends away from this base part (20), said head part (22) having, in its longitudinal section from the end of the head part (22) in the direction of the base part (20), a diameter (D) which firstly increases and then decreases again, said head part (22) representing a male insertion part which, overcoming a spring force which acts radially outwards in the direction of the diameter (D), can be received by an undercut female insertion part formed or borne by the opening of the thin wall (14, 18), wherein the head part (22) represents a guide or channel (24) for one or two or more thrust elements or retaining elements (28) which are pushed by at least one spring (26) into a position protruding beyond the end of the guide (24) or of the channel and of which the ends protruding from the guide (24) or the channel have a triangular form in a plane of projection lying perpendicular to the thin wall (14, 18), wherein the base part (20) is formed by a plate (38) which covers the longitudinal rims (36) of the opening (16) in the thin wall (18), wherein the head part (22) is provided as a casing with fastening projections, such as fastening cams (made of flexible material) or leaf spring apparatuses (42), which have flexible fastening surfaces, which casing can be clipped into an aperture opening (16, 12) in the thin wall (14, 18) such that it grips only one thin wall (rear metal sheet) (14), and in that, in the casing, unlocking apparatuses (releasing means) (46) are provided with which the thrust elements (28) can be pulled back into the casing from the front, and the casing can be released from the other thin wall (front metal sheet) (18), the dimensions between the retaining region of the fastening projections (72) and those of the thrust elements (28) on the one hand and of the bearing plane (45) of the base part (22) on the other hand being selected such that, when the thrust elements (28) are pulled back, the fastening protrusions (40) and bear on the front metal sheet (18) with play, **characterised in that** on the bearing plane (45) of the base part (20) there is arranged a compression spring (49) which comes to lie between this and the associated edge plane (47) of the thin wall (front metal sheet) (18).

2. The snap fastening according to Claim 1, **characterised in that** the compression spring (49) represents a spiral spring which surrounds the head part (22), which has a rectangular or square cross-section, close to the base part (20).

3. The snap fastening according to Claim 1 or 2, **characterised in that** the compression spring (49) is fixed to the bearing plane (45) of the base part (20).

4. The snap fastening according to Claim 1, **characterised in that** the spiral spring (49) is pushed against the bearing plane (45) of the base part (20) by a disc (51).

5. The snap fastening according to Claim 4, **characterised in that** the disc (51) forms a ring (53) surrounding the axial extension of the spiral spring (42) in its compressed state and in this case can produce a form-fitting pressure connection between the bearing plane (45) and the edge plane (47) of the thin wall (front metal sheet) (18).

6. The snap fastening according to any one of Claims 1 to 5, wherein the releasing means (46) is formed from an actuating mandrel (63, 163) which is rotatably borne in the base part, **characterised in that** the actuating mandrel (63, 163) protrudes through the compression spring (43) and where applicable the disc (51) and forms, at its inner end face directed to the thrust elements (28), a radial web (65) which engages in recesses (67) of the retaining elements (28) and retracts the retaining elements (28) against spring force when the actuating mandrel (63, 163) is rotated in the releasing direction.

7. The snap fastening according to Claim 6, **characterised in that** instead of the actuating mandrel (63, 163) an axial borehole (69), which reaches up to the recesses (67) in the retaining elements (28), is provided, and through which a screw driver (73) with a flat blade (71) can be guided, in order to retract the retaining elements (28) with the blade (71).

8. The snap fastening according to any one of Claims 1 to 7, wherein the actuating mandrel (63, 163) is equipped at its outer end with a receptacle for a turning tool, wherein the end does not protrude beyond the base part (20).

9. The snap fastening according to any one of Claims 1 to 7, wherein the actuating mandrel (63, 163) at its outer end is equipped with a handle such as a knurled rotary knob and protrudes beyond the end of the head part.

10. The snap fastening according to Claim 1 or 2, **characterised in that** the compression spring is a hollow-curved leaf spring (249, 349).

11. The snap fastening according to Claim 1 or 2, **characterised in that** the U-shaped leaf spring (442) is retained in position by lateral protrusions (461) formed by the casing (446).

## Revendications

1. Fixation à encliquetage (10) apte à immobiliser une première paroi mince (14) pourvue d'une traversée (12), telle qu'une paroi de boîtier, un vantail de porte, un clapet ou similaire, sur une seconde paroi mince (18) pourvue également d'une traversée (16), telle qu'un support mural à paroi mince, un cadre de boîtier, un cadre de porte, une bordure d'ouverture murale ou similaire, comportant une partie pied (20) susceptible d'être montée sur la première (ou seconde) paroi mince (14, 18) dans sa traversée (12, 16), une partie tête (22) s'étendant en éloignement de cette partie pied (20), ladite partie tête (22) présentant en section longitudinale un diamètre (D) qui croît tout d'abord depuis l'extrémité de la partie tête (22) en direction de la partie pied (20) et qui décroît ensuite, ladite partie tête (22) représentant une partie d'enfichage mâle qui est susceptible d'être reçue par une partie d'enfichage femelle en contre-dépouille formée ou portée par la traversée de la paroi mince (14, 18) en surmontant l'effort d'un ressort agissant en direction du diamètre (D) radialement vers l'extérieur, la partie tête (22) représentant un guidage ou un canal (24) pour un ou pour deux ou plusieurs éléments de poussée ou éléments de retenue (28) sollicités par au moins un ressort (26) vers une position dépassant au-delà de l'extrémité du guidage (24) ou du canal, dont les extrémités dépassant au-delà du guidage (24) ou du canal ont une configuration triangulaire dans un plan de projection situé perpendiculairement à la paroi mince (14, 18), la partie pied (20) étant formée par une plaque (38) recouvrant les arêtes longitudinales (36) de la traversée (16) dans la paroi mince (18), dans laquelle la partie tête (22) est prévue sous forme de boîtier comportant des saillies de fixation pourvues de surfaces de fixation souples, telles que des cames de fixation (en matériau souple) ou des moyens formant ressort à lame (42), ledit boîtier pouvant être encliqueté dans une ouverture traversante (16, 12) de la paroi mince (14, 18) de manière à ne saisir que ladite paroi mince (tôle arrière) (14), et des moyens de déverrouillage (moyens de détachement) (46) sont prévus dans le boîtier, par lesquels les éléments de poussée (28) sont susceptibles d'être retirés dans le boîtier depuis l'avant, et le boîtier est détachable de l'autre paroi mince (tôle avant) (18), les dimensions entre la zone de retenue des saillies de fixation (72) et celles des éléments de poussée (28) d'une part et le plan d'appui (45) de la partie pied (22) d'autre part sont choisies de telle sorte que lorsque les éléments de poussée (28) sont retirés, les saillies de fixation (40) reposent avec jeu sur la tôle avant (18),
**caractérisée en ce que**
sur le plan d'appui (45) de la partie pied (20), il est prévu un ressort de compression (49) qui vient se poser entre ledit plan et le plan de bord associé (47) de la paroi mince (tôle avant) (18).

2. Fixation à encliquetage selon la revendication 1, **caractérisée en ce que** le ressort de compression (49) représente un ressort spiralé qui entoure la partie tête (22), présentant une section transversale rectangulaire ou carrée, à proximité de la partie pied (20).

3. Fixation à encliquetage selon la revendication 1 ou 2, **caractérisée en ce que** le ressort de compression (49) est fixé sur le plan d'appui (45) de la partie pied (20).

4. Fixation à encliquetage selon la revendication 1, **caractérisée en ce que** le ressort spiralé (49) est pressé par une rondelle (51) contre le plan d'appui (45) de la partie pied (20).

5. Fixation à encliquetage selon la revendication 4, **caractérisée en ce que** la rondelle (51) constitue une bague (53) qui entoure l'extension axiale du ressort spiralé (49) dans son état comprimé et qui est capable d'établir une liaison sous pression en coopération de formes entre le plan d'appui (45) et le plan de bord (47) de la paroi mince (tôle avant) (18).

6. Fixation à encliquetage selon l'une des revendications 1 à 5, dans laquelle le moyen de détachement (46) est formé par un mandrin d'actionnement (63, 163) monté mobile en rotation dans la partie pied, **caractérisée en ce que** le mandrin d'actionnement (63, 163) traverse le ressort de compression (43) et le cas échéant la rondelle (51) et forme une barrette radiale (65) à son extrémité frontale intérieure dirigée vers les éléments de poussée (28), barrette qui vient s'engager dans des retraits (67) des éléments de retenue (28) et qui, lors d'une rotation du mandrin d'actionnement (63, 163) en direction de détachement, retire les éléments de retenue (28) à l'encontre de l'effort du ressort.

7. Fixation à encliquetage selon la revendication 6, **caractérisée en ce qu'**à la place du mandrin d'actionnement (63, 163), il est prévu un perçage axial (69) qui s'étend jusqu'aux retraits (67) dans les éléments de retenue (28) et qui permet de faire passer un tournevis (73) présentant une panne plate (71) pour retirer les éléments de retenue (28) au moyen de la panne (71).

8. Fixation à encliquetage selon l'une des revendications 1 à 7, dans laquelle le mandrin d'actionnement (63, 163) est pourvu à son extrémité extérieure d'un logement pour un outil de rotation, l'extrémité ne dépassant pas au-delà de la partie pied (20).

9. Fixation à encliquetage selon l'une des revendications 1 à 7, dans laquelle le mandrin d'actionnement (63, 163) est pourvu à son extrémité extérieure d'une manette, telle qu'un bouton tournant moleté, et dépasse au-delà de l'extrémité de la partie tête.

10. Fixation à encliquetage selon la revendication 1 ou 2, **caractérisée en ce que** le ressort de compression est un ressort à lame (249, 349) cintré creux.

11. Fixation à encliquetage selon la revendication 1 ou 2, **caractérisée en ce que** le ressort à lame (442) en forme de U est maintenu en position par des saillies latérales (461) formées par le boîtier (446).
